# EUROPEAN PATENT APPLICATION

(11) **EP 2 405 615 A1**
(43) Date of publication of application: **11.01.2012**
(21) Application number: 10748371.1
(22) Date of filing: 05.03.2010
(51) Int. Cl.: H04L 12/56

(54) **DEVICES AND METHOD FOR THE ADMISSION AND CONTROL OF RESOURCES IN MULTI-DOMAIN ENVIRONMENTS**

(30) Priority: 06.03.2009 ES 200900640
(71) Applicant: Telefónica, S.A., 28013 Madrid (ES)
(72) Inventor: CALLEJO RODRIGUEZ, María, Angeles, E-28013 Madrid (ES); ENRIQUEZ GABEIRAS, José, E-28013 Madrid (ES)
(74) Representative: Carpintero Lopez, Francisco
(86) International application number: PCT/ES2010/070123
(87) International publication number: WO 2010/100311

(57) **Abstract**

The invention relates to devices and a method for resource and admission control in multi-domain environments, particularly in Next Generation Networks. A device (120) in the control plane of a first domain (100) is configured, in the event of receiving a request from the service plane (110) for establishing, modifying or releasing a connection, for sending one of the following requests to the other device (220) in a second domain (200) and thus providing guaranteed quality of service in multi-domain environments:
- a first type of request (720) so that the other device (220) reserves and configures the necessary resources;
- a second type of request (800) so that the other device (220) releases pre-assigned resources; and
- a third type of request so that the other device (220) modifies (760) the pre-assigned resources.

## Description

### Technical Field of the Invention

The present invention generally relates to the control of resources for assuring the quality of service in telecommunication networks, and more particularly to the control of resources in Next Generation Networks.

### Background of the Invention

There are currently work groups in the ITU-T (International Telecommunications Union - Standardisation) and ETSI/TISPAN (European Telecommunications Standards Institute/Telecommunications and Internet converged Services and Protocols for Advanced Networking) whose work focuses on defining standards in the field of Next Generation Networks (NGN). The development of the Next Generation Network has three fundamental objectives:
- Providing better access, in terms of bandwidth and network performance parameters (QoS, Quality of Service).
- Enabling the network to efficiently transport different services, with different network requirements.
- Integrating different types of networks and their services, e.g., land line-mobile integration, integration of services between different operators, etc.

In this context, where QoS provision is recognized as one of the objectives to be covered in Next Generation Networks as is the provision of the new services in environments with multiple networks, the capacity of providing QoS in multi-domain environments is necessary for providing services with guaranteed QoS over current networks.

Although the work performed in the work groups in the ITU-T and ETSI/TISPAN is extensive and is used as a reference in the development of commercial equipment, there are inconclusive works such as, for example, in the field of QoS provision in multi-domain and/or multi-operator environments.

In the article *"*Bridging the standardization gap to provide QoS in current NGN architectures" of the publication IEEE Communications Magazine, special issue on "ITU-T International Standards in Information and Communications Technologies" (October 2008*),* a thorough analysis is made of the current problems in Next Generation Network architectures which prevent the deployment of guaranteed QoS. The poor specification of the interfaces between the different control systems, or their non-specification, is particularly identified as a clear drawback which makes the effective coordination of the different systems forming an NGN network unfeasible. This is a clear technical problem in the provision of advanced services which require the synchronization of the processes of different systems. It is preferable to not depend on manufacturer-dependent implementations which could either endanger the cooperation between domains or would not be of interest for operators, as they are bound to a specific provider.

Specifically, for the purpose of providing end-to-end QoS in multi-domain environments (i.e., crossing two or more networks, possibly of different operators), the specification and standardization of interfaces in control planes (set of systems responsible for controlling the physical resources of a NGN network) of the different networks would be necessary for the purpose of coordinating the quality of service mechanisms available in each of the domains.

This inter-domain interface should not be confused with the interface that could have two ETSI/TISPAN RACSs (Resource and Admission Control SubSystems,) or ITU-T RACFs (Resource and Admission Control Functions,) deployed in the same domain for the purpose of providing intra-domain QoS solutions in large networks, such as the "Telefonica" network in Spain.

Today, both ITU-T an ETSI/TISPAN have identified the need to define an inter-domain interface between the modules responsible for controlling resources (Ri interface) and they have even provided a series of requirements for the same. However, said interface is not standardized in terms of primitives and attributes by either of the two standardization bodies. Therefore, the technical solution for the provision of end-to-end QoS in multi-domain environments is not available as of today in standards or, therefore, in commercial products either.

On the other hand, for the purpose of providing guaranteed QoS to the end user, it would also be necessary to coordinate the QoS mechanisms available in the home network for the purpose of assuring the QoS for the end user. As of today, the RACS or RACF are not coordinated with the CPE (Customer Premise Equipment), because said interface has been set aside for future studies, whereby there is no solution which allows the coordination between the control plane of the network operator and the mechanisms available in the user network.

Accordingly, as of today the provision of guaranteed end-to-end QoS is not technically viable, because there are no processes which allow coordinating the QoS mechanisms of one operator with those of other operators or with the home network.

The implementation of end-to-end QoS solutions using the functionalities available in the service or application plane is also being studied today. The provision of end-to-end QoS using the IMS (IP Multimedia Subsystem) core for coordinating the configuration of resources in access networks is specifically being studied. The greatest drawback of this approach is that it would be necessary to use the SIP (Session Initiation Protocol) protocol at the application level, i.e., not only in the operator servers but also in the customer applications, which would be a limitation to the solution because it could not be used in the provision of services with guaranteed QoS the signaling of which is not SIP-based. In the event of developing a new application/service which requires specific network provisions in a multi-domain environment and cannot use SIP, the network administrator would have to define and implement the interactions between the inter-domain servers.

### Description of the Invention

An objective of the invention is to provide a process and its corresponding communication system whereby the problems described above are solved at least in part.

For that purpose, devices and a method according to independent claims are provided according to the invention. Preferred embodiments are defined in the dependent claims.

According to one aspect of the invention devices and a method are proposed which extend the capacities of the control plane of a telecommunication network, such as the NGN network, allowing the negotiation with other networks of the same type for the reservation and configuration of network resources for providing guaranteed QoS in multi-domain environments which also contemplate the home network of the end user. This control plane could be used by any service or application plane, including IMS or any another service platform of the network operator. This allows converging network operators to use this control plane with any of their service platforms.

The present invention is preferably implemented in QoS provision modules in NGN ETSI/TISPAN RACS and ITU-T RACF environments allowing QoS provision in a practicable manner in multi-domain environments and in the particular case of a residential gateway, the element responsible for resource control of the home network. It also includes the implementation of the interfaces between QoS provision modules, the functionalities associated therewith and the time optimization of the negotiation between the different devices arranged in different networks.

Another aspect of the invention is a computer program, which is stored in at least one computer-readable medium and comprises code means suitable for running the described method when said program is run in a computer.

### Description of the Drawings

The invention will be better understood and its numerous objectives and advantages will be more evident for the persons skilled in the art in reference to the following drawings, together with the attached specification, in which:
Figure 1 shows multiple telecommunication networks in a multi-domain environment.
Figure 2 shows the ITU-T NGN architecture.
Figure 3 shows the ETSI/TISPAN NGN architecture.
Figure 4 shows the interaction between domains when the source domain controls the source IP address.
Figure 5 shows the interaction between domains when the source domain does not control the source IP address.
Figure 6 shows a simplified interaction diagram between two domains.
Figure 7 shows a simplified interaction diagram between three domains.

The same reference numbers refer to identical elements in all the drawings.

### Preferred Embodiments of the Invention

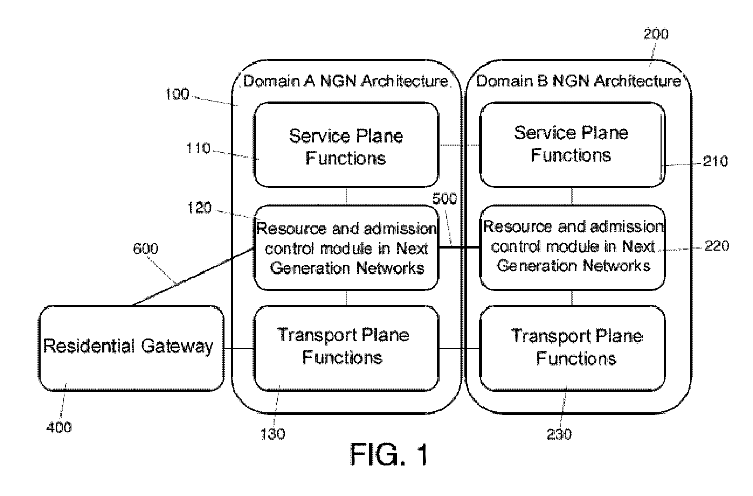

In view of the described drawings, a practical embodiment of the invention can be described herein. Figure 1 shows an example of a multi-domain environment, including multiple telecommunication networks in which the present invention can be implemented. Only the elements necessary for understanding the present invention are shown. The multi-domain environment comprises several domains (consisting, for example, of Next Generation Networks, NGN networks), which generally though not necessarily are of different operators. The figure shows the architecture of NGN networks in two domains, domain A 100 and domain B 200, as well as the particular case of the residential gateway 400. As seen in the figure, NGN networks basically comprise the following three functions: service plane 110,210 functions, a resource and admission control device (also referred to as a module) in Next Generation Networks 120,220 and transport plane 130,230 functions. The admission and control module can be RACS (Resource and Admission Control Sub-System) of the ETSI/TISPAN architecture or RACF (Resource and Admission Control Function) of the ITU-T NGN architecture. According to the present invention, the interface 500 between resource and admission control modules in a multi-domain environment (referred to as Ri interface in the ITU-T NGN architecture and Ri' interface in the ETSI/TISPAN NGN architecture) and the interface 600 between the resource and admission control module and the residential gateway (Rrg interface), which is considered an extension of the control plane, are specified.

The implementation of the new process for the resource and admission control module for Next Generation Networks in multi-domain environments has required the development of the following points:
- Implementation of the Ri/Ri' interface for the inter-domain interaction of the control modules of the NGN network (which could be ETSI/TISPAN RACSs or ITU-T NGN RACFs) and of the new Rrg interface for the interaction of the module with the residential gateway. These interfaces are shown in Figure 1. For the purpose of aiding understanding of this figure, some functions available in NGN networks are not shown and only the interfaces to be implemented in the new proposed method have been shown.
- Implementation of the message and action sequence of the modules involved in the negotiation of end-to-end network resources.
- Particularization of the inter-domain interaction for the case of the home network.

The development of these three points constitutes the implementation of the new method expanding the capacities of the control plane of the NGN network such that guaranteed QoS can be provided in multi-domain environments, which contemplate both multi-operator environments and environments in which the home network is included.

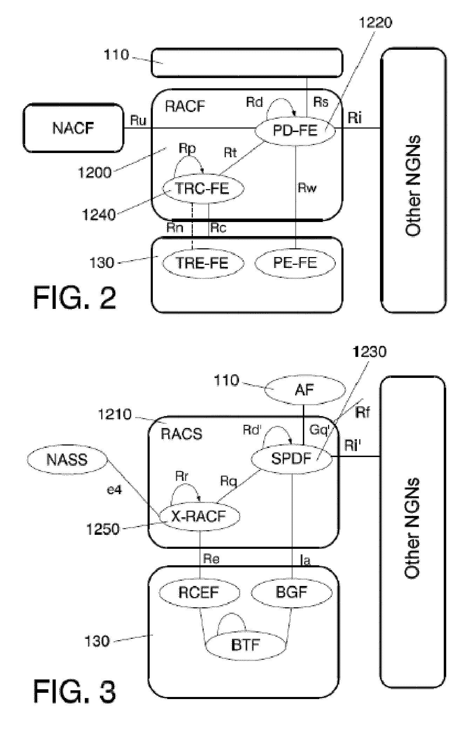

Figures 2 and 3 describe the main functions and interfaces of the architectures defined in ITU-T and in ETSI/TISPAN.

Today, the devices (modules) responsible for admission control and resource reservation are RACF 1200 (in the case of ITU-T NGN) and RACS 1210 (in the case of ETSI/TISPAN). In turn, each of these modules is made up of the following sub-modules:
- The ITU-T PD-FE (Policy Decision Functional Entity) 1220 and the ETSI/TISPAN SPDF (Service-based Policy Decision Function) 1230 are underlying technology-independent modules responsible for providing a common interface to the service or application plane. They are also responsible for configuring all the equipment that is common to different network technologies (such as border routers, for example).
- The ITU-T TRC-FE (Transport Resource Control Functional Entity) 1240 and the ETSI/TISPAN x-RACF (Generic Resource and Admission Control Function) 1250 are the underlying network technology-dependent modules and are the responsible for configuring the specific functions in the transport plane.

Some interfaces and functionalities such as those implemented by the ITU-T NACF (Network Attachment Control Function) or ETSI/TISPAN NASS (Network Attachment Subsystem) module which is responsible for maintaining information about user authorization, maintaining information about user location, etc., are also shown in the figures. However, since these interfaces and functionalities are not object of the present invention, they are not explained in detail.

The present document describes a new method which is implemented in network technology-independent modules, i.e., in ITU-T PD-FE or ETSI/TIPAN SPDF. As can be seen in the figures they are the modules responsible for the inter-domain interface 500 (Ri and Ri', respectively), the implementation of which is described below. For simplicity's sake, when any SPDF modification is mentioned hereinafter, this same modification is applicable to PD-FE.

As discussed above, the Ri/Ri' interface 500 is the interface responsible for synchronizing the admission control and resource reservation processes between several domains. Therefore, the following requirements are essential:
- The interface must allow the SPDF of the initial domain to require resource reservation and configuration in the domains through which the session will take place.
- Given its inter-domain nature, the interface must allow interaction between the control planes of different operators without compromising the security and privacy thereof. This means that information relating to the intra-domain topology or to mechanisms of each of the operators cannot be exchanged.

Although this interface is identified in the standards, as of today there is no specification and/or implementation thereof. This description provides an implementation thereof.

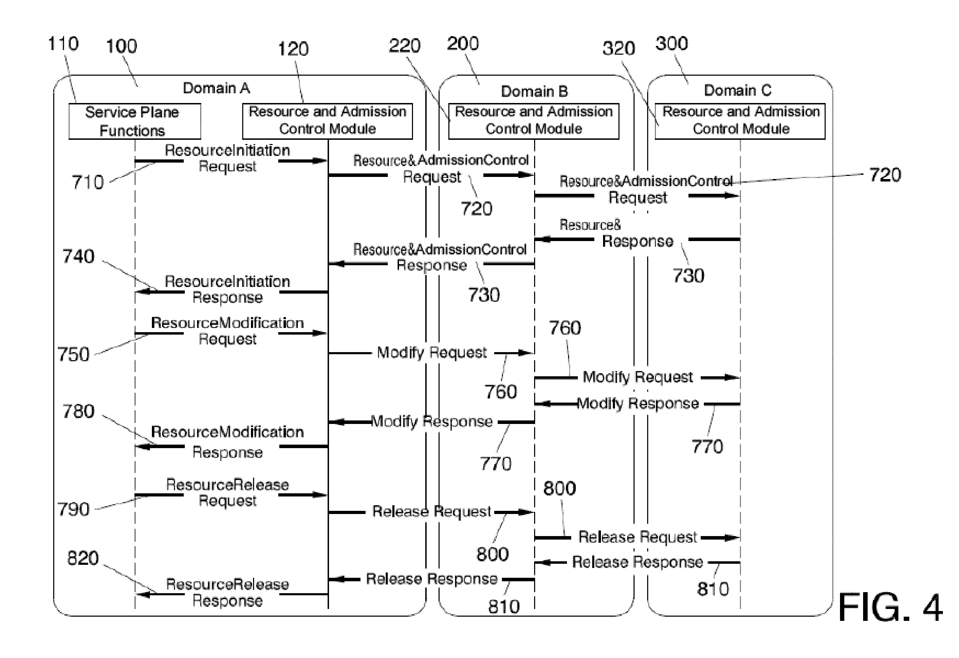

Taking into account that, requests for the unidirectional or bi-directional flow reservation can reach the SPDF, the following transactions, some of which are shown in Figures 4-7, are implemented:
- *Requests* used for triggering actions in another SPDF:
   - A first type of request, *Resource&AdmissionControl request* 720: used for asking the next SPDF to reserve and configure the necessary resources.
   - A second type of request, *Release request* 800: used for releasing the assigned resources.
   - A third type of request, *Modify request* 760: for modifying the pre-assigned resources
   - A fourth type of request, *Resource&AdmissionControllnitiation request* 830: this primitive is necessary for asking the end domain to start resource reservation. It is used when resources have to be reserved in the initial domain for a flow the source IP of which does not belong to the domain. This primitive is necessary if the transit domains are not the same in both directions of communication. This function is optional although necessary for controlling the inter-domain links of the transit domains.
   - A fifth type of request, *ReleaseInititiation request:* asks the domain controlling the source IP of the flow to release resources. This function is optional although necessary for controlling the inter-domain links of the transit domains.
   - A sixth type of request, *ModifyInititation request:* asks the domain controlling the source IP of the flow, to modify the reserved resources. This function is optional although necessary for controlling the inter-domain links of the transit domains.
- *Responses* used for informing about the results of the SPDF:
   - A first type of response, *Resource&AdmissionControl response* 730: the destination domain informs about the result of its resource admission and configuration operation.
   - A second type of response, *Release response* 810: response to the resource release request.
   - A third type of response, *Modify response* 770: response to the pre-assigned resource modification request
   - A fourth type of response, *Resource&AdmissionControllnitiation response* 840: response to the Resource&AdmissionControllnitiation request. This function is optional although necessary for controlling the inter-domain links of the transit domains.
   - A fifth type of response, *ReleaseInititiation response:* response to the *ReleaseInitiation request.* This function is optional although necessary for controlling the inter-domain links of the transit domains.
   - A sixth type of response, *ModifyInititation response:* response to the *ModifyInitiation request.* This function is optional although necessary for controlling the inter-domain links of the transit domains.

The information exchanged in these interfaces will contain the following fields:
- Service Class: information about the required service class.
- Flow(s) description: information about the flows (connections) (source IP, destination IP, source and/or destination ports and protocol)
- Bandwidth: required bandwidth for each flow (connection).
- Point of entry into the domain: obtained from the *next_hop* field of the BGP (Border Gateway Protocol) routing table. This allows the request receiver domain to know the traffic point of entry.

Figures 4-5 show the negotiation sequence in two different scenarios. Figure 4 shows the use of these primitives in a scenario in which resources are reserved (use of *Resource&AdmissionControl request* and *Resource&AdmissionControl response* primitives), modified (use of *Modify request* and *Modify response* primitives) and released (use of *Release request* and *Release response* primitives) for a connection with a third domain 300, taking into account the requests received by the resource and admission control module 120 of the first domain 100 from the service plane 110 functions.

If the module 120 receives a *ResourceInitiation Request* 710 from the service plane 110, it reserves and configures the necessary resources for the connection and sends a *Resource&AdmissionControl request* 720 to the resource and admission control module 220 of the second domain 200. The latter also reserves and configures the necessary resources and sends the *Resource&AdmissionControl request* 720 to the resource and admission control module 320 of the third domain 300. This module also reserves and configures the necessary resources and since it is the resource and admission control module of the last domain 300 in the chain, it sends a *Resource&AdmissionControl response* 730 to the resource and admission control module 220 of the second domain 200, which passes it along to the resource and admission control module 120 of the first domain 100. This module sends a *ResourceInitation Response* 740 to the service plane 110.

If the module 120 receives a *ResourceModification Request* 750 from the service plane 110, it modifies the necessary resources for the connection and sends a *Modify request* 760 to the resource and admission control module 220 of the second domain 200. The latter also modifies the necessary resources and sends the *Modify request* 760 to the resource and admission control module 320 of the third domain 300. This module also modifies the necessary resources and since it is the resource and admission control module of the last domain 300 in the chain, it sends a *Modify response* 770 to the resource and admission control module 220 of the second domain 200, which passes it along to the resource and admission control module 120 of the first domain 100. This module sends a *ResourceModification Response* 780 to the service plane 110.

If the module 120 receives a *ResourceRelease Request* 790 from the service plane 110, it releases the resources of the connection and sends a *Release request* 800 to the resource and admission control module 220 of the second domain 200. The latter also releases the resources and sends the *Release request* 800 to the resource and admission control module 320 of the third domain 300. This module also releases the resources and since it is the resource and admission control module of the last domain 300 in the chain, it sends a *Release response* 810 to the resource and admission control module 220 of the second domain 200, which passes it along to the resource and admission control module 120 of the first domain 100. This module sends a *ResourceRelease Response* 820 to the service plane 110.

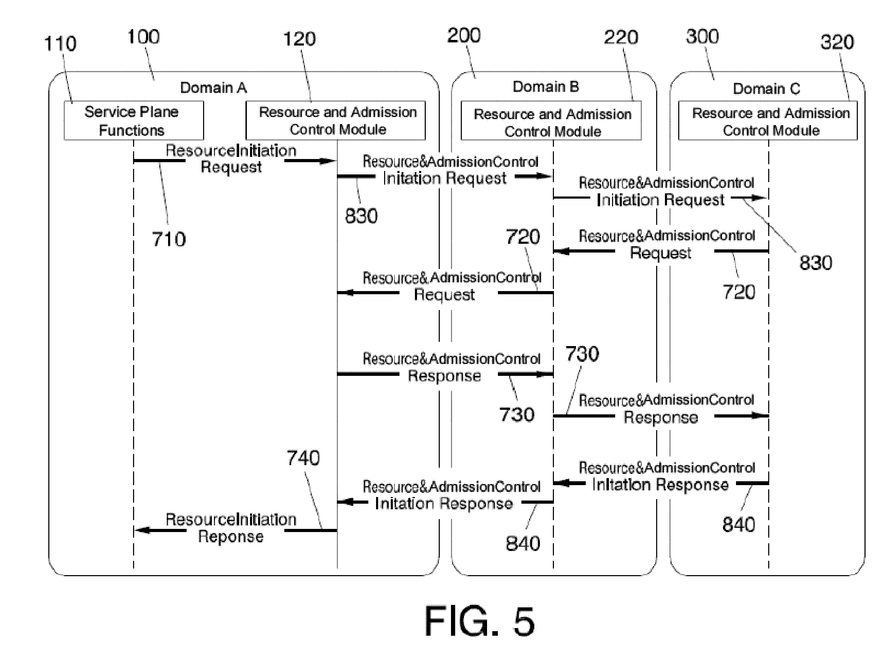

Figure 5 shows the use of the primitives previously classified as optional which allow the domain controlling the source IP to control resource reservation associated with said connection and to send the result of this operation to the domain that received the request from the application plane. This functionality is optional and would be required when the transit domains are different in both directions of the communication.

As can be seen in this figure, when a domain receives a request for reserving, modifying or releasing resources for a connection the source IP address of which, is not controlled by this domain, it makes use of the Resource&AdmissionControllnitiation request/response, ReleaseInititation request/response and ReleaseInititation request/response primitives, respectively.

If the module 120 of the first domain 100 receives a *ResourceInitiation Request* 710 from the service plane 110 and does not control the source IP address of the connection, it sends a *Resource&AdmissionControllnitiation request* 830 to the resource and admission control module 220 of the second domain 200. The situation that the first domain does not control the source IP address of the connection occurs for example in the following case: different flows (different connections) from the customer to the server and from the server to the customer may be needed for the same application. Only one domain requests from the service part, a reservation for all those flows, and therefore it may be necessary to contemplate this case. The second domain 200 passes the request 830 to the resource and admission control module 320 of the third domain 300. Since this domain controls the source IP address of the connection, it starts the process for reserving and configuring the necessary resources described above in reference to Figure 4, sending a *ResourceAdmission Control Request* 720 to the resource and admission control module 220 of the second domain 200. This process ends with sending a *Resource Admission Control response* from the resource and admission control module 220 of the second domain 200 to the resource and admission control module 320 of the third domain 300. The latter sends a *Resource&AdmissionControllnitiation response* 840 to the resource and admission control module 220 of the second domain 200, which passes it along to the resource and admission control module 120 of the first domain 100. This module sends a *ResourceInitation Response* 740 to the service plane 110.

In these interactions it is very important to know the criterion for selecting the domain to which to send the request. For that purpose, the BGP (Border Gateway Protocol) routing information, available in all the domains (either in border routers or in route reflectors), is used for the purpose of finding the next domain of the path (available for each destination IP in the AS Path Autonomous System or Domain Path field). This information is combined with a resolution based on DNS (*Domain Name System*) for obtaining the pointer (direction of the system responsible for controlling the resources in the next domain) to which to send the requests for a particular domain.

One of the most important achievements of the new method object of this patent application is the implementation of a resource reservation and configuration process which allows minimizing the response time with respect to the end-to-end QoS request.

For the purpose of optimizing the reservation process, in which the SPDF applies an admission control algorithm, (i.e., it computes a mathematical function) or evaluates the resource configuration and user profile, in which the SPDF 1230 interacts with x-RACF 1250, the underlying network technology-dependent module, so that the latter configures the resources of the transport plane, the interaction between domains is based on two phases for parallelizing the resource configuration in the different domains. The resource configuration process in the transport plane is the most time consuming, in the order of hundreds of milliseconds to even seconds, depending on the underlying technology. Resource reservation by means of applying an admission control algorithm is of the order of 1-10 milliseconds. Therefore, a solution that sequences the resource configuration processes in all the traversed domains would introduce high response latencies to the end user.

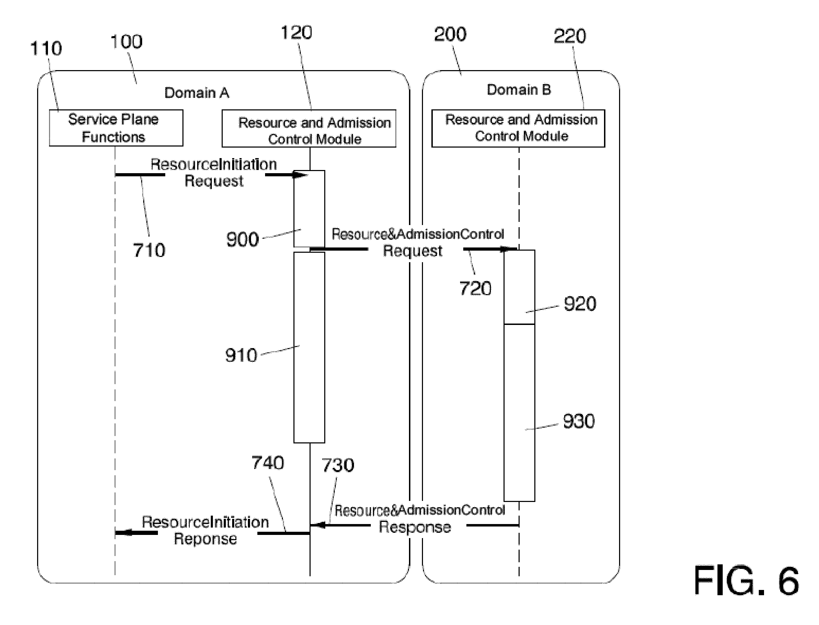

Figure 6 shows in a simplified manner, the parallelization of the configuration when there are two domains involved. As shown in the figure, the arrival of a new *ResourceInitiation Request* 710 in the admission and control module of the initial domain triggers the following processes:

Process 900: The admission and control module 120 of the initial domain 100 verifies the type of request and applies an admission control (resource reservation) algorithm for verifying that new resources can be admitted after consulting with the NACF or NASS. Once the connection is admitted, a *Resource&AdmissionControl request* 720 is sent to the next domain 200 and process 910 is then performed. The operations to be performed in 900 require from 1 ms to 10 ms and are performed by the SPDF sub-module 1230.

Process 910: The admission and control module of the initial domain 120 configures the transport layer functions, launching the actions of the x-RACF 1250 which interacts with the transport plane for effectively applying the necessary policies guaranteeing the desired quality. This operation requires the order of 100 ms to 1 s.

Process 920: The admission and control module 220 of the second and last domain 200 receives the request 720 (*Resource&AdmissionControl request*). During the period 920, this module verifies if there are resources available in the network, in which case it proceeds to processes 930. This operation is similar to that described in 900 and therefore requires from 1 ms to 10 ms and is performed by the SPDF of the second domain 200.

Process 930: The last domain configures the transport plane. Once said task has successfully ended, it sends a response 730 to the resource request made by the previous domain (*Resource&AdmissionControl response*). The configuration process lasts in the order of 100 ms to 1 s.

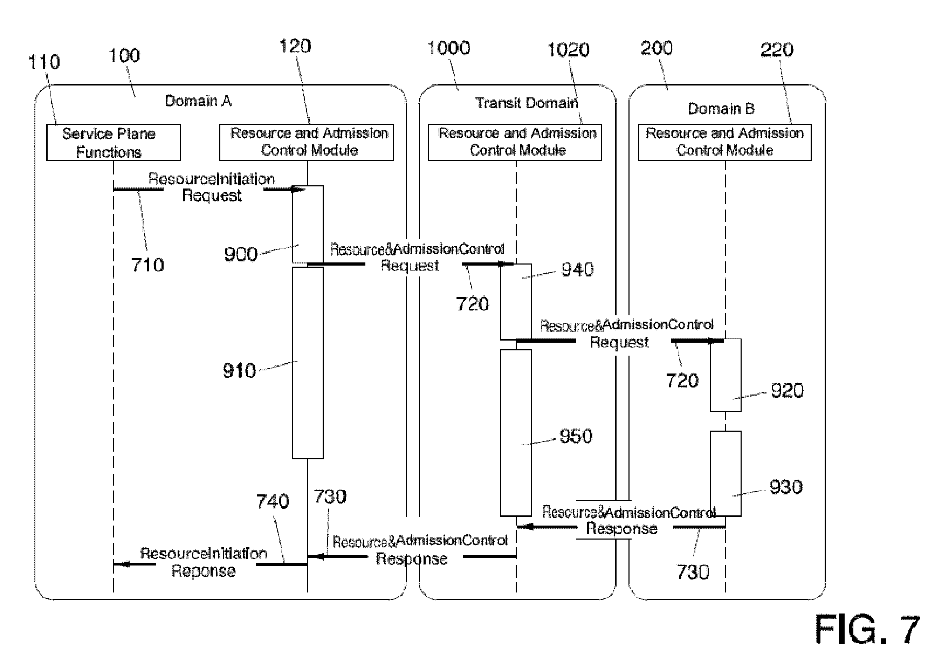

As discussed above, this process parallelizes the resource configuration in the two domains. To show the positive effect of this solution, Figure 7 shows a variant of Figure 6 in which the resource and admission control modules of three domains interact. In the sequence diagram of Figure 7, as shown, once the resource and admission control module 1020 of the transit domain 1000 has verified the availability of resources 940, the latter forwards the request 720 to the last domain 200. Then it configures 950 the transport plane. On this occasion, it can be seen that the process parallelizes the configuration processes 910,930,950, preventing the major component of the response time with respect to the QoS request from linearly depending on the number of domains involved, thereby reducing the time for establishing a connection with guaranteed QoS.

Finally, a new interface is implemented between the residential gateway 400 and the RACF 1200 or the RACS 1210 which will be based on that described above (the primitives and the process described above are maintained). The coordination of the QoS provision mechanisms in the home network with those characteristic of the network of the operator is thus contemplated as a particular case of interaction between two domains in which the only change is that in the exchanged information, the point of entry into the domain is omitted and the point of access to the network or first IP node therein (e.g., the BRAS in a xDSL network) is taken into account.

The proposed solution allows a telecommunication network operator to provide services with guaranteed qualities of service in a multi-domain environment. For that purpose it is necessary to guarantee the coordination of the mechanisms available in each of the domains for the purpose of guaranteeing end-to-end QoS provision in communications taking place through the networks.

Although the invention has been illustrated and described in detail in the drawings and in the preceding description, such illustration and description must be considered as being illustrative or exemplary and non-restrictive; the invention is not limited to the disclosed embodiments.

The invention can of course be implemented with telecommunication networks functioning according to standards other than the NGN standard disclosed in the present description.

The persons skilled in the art can understand and make other variations of the disclosed embodiments by putting the claimed invention into practice from an analysis of the drawings, the specification, and the attached claims. In the claims, the term "which comprises" or "comprising" does not exclude other elements or steps, and the indefinite article "a" does not exclude plurality. A single processor or another unit can perform the functions of different elements listed in the claims. The mere fact that certain measures are mentioned in different mutually dependent claims does not mean that a combination of these measures cannot be advantageously used. A computer program can be stored/distributed in a suitable medium, such as an optical storage medium or a solid state medium supplied together with or as a part of other hardware, although it can also be distributed in other ways, such as through Internet or other cable or wireless telecommunication systems. No reference symbol in the claims should be interpreted as limiting the scope.

## Claims

1. Device (120) in the control plane of a telecommunication network (100) with an architecture comprising service plane functions (110), control plane functions and transport plane (130) functions, wherein the device is configured for admission control and resource reservation for telecommunication networks in multi-domain environments, i.e., in environments with multi-domain and/or multi-operator telecommunication networks or in environments with at least one telecommunication network of an operator and a home network of an end user, wherein the device comprises an interface (500,600) for communicating with another device (220) for admission control and resource reservation, which is located in another domain (200), i.e., in a telecommunication network of another operator or in the home network, **characterized in that** the device (120) is configured, in the event of receiving a request from the service plane (110), for establishing, modifying or releasing a connection the source address of which is controlled by the domain (100) of the device (120), for sending one of the following requests through the interface for triggering one of the following actions in the other device (220) and thus providing guaranteed quality of service in multi-domain environments:
- a first type of request (720) so that the other device reserves and configures the necessary resources;
- a second type of request (800) so that the other device releases pre-assigned resources; and
- a third type of request so that the other device modifies (760) the pre-assigned resources.

2. Device according to claim 1, **characterized in that** the device (120) is configured for sending the following responses to the other device through the interface (500,600):
- a first type of response (730) for informing the other device about the result of a resource reservation and configuration operation started up after receiving a first type of request (720) from the other device;
- a second type of response (810) for informing the other device about the result of a pre-assigned resource release operation, started up after receiving a second type of request (800) from the other device; and
- a third type of response (770) for informing the other device about the result of a pre-assigned resource modification operation, started up after receiving a third type of request (760) from the other device.

3. Device according to claim 1 or 2, **characterized in that** the device is configured, in the event of receiving a request from the service plane for establishing, modifying or releasing a connection the source address of which is not controlled by the domain of the device, for sending one of the following requests through the interface:
- a fourth type of request (830) so that the device for admission control and resource reservation, which is located in the end domain, starts resource reservation and configuration, sending a first type of request (720);
- a fifth type of request so that the device for admission control and resource reservation, which is located in the domain controlling the source of the connection, starts the pre-assigned resource release, sending a second type of request; and
- a sixth type of request so that the device for admission control and resource reservation, which is located in the domain controlling the source of the connection, starts the pre-assigned resource modification, sending a third type of request.

4. Device according to claim 3, **characterized in that** the device is configured for sending the following responses to the other device through the interface:
- a fourth type of response (840) to a fourth type of request (830) from the other device;
- a fifth type of response to a fifth type of request from the other device; and
- a sixth type of response to a sixth type of request from the other device.

5. Device according to any of the preceding claims, **characterized in that** the device is configured for sending the following information through the interface:
- information about the required service class for each connection;
- information about the connections;
- required bandwidth for each connection; and
- point of entry into the domain.

6. Device according to claim 1, **characterized in that** the device is configured, after receiving the request (710) from the service plane, for verifying that new resources (900) can be admitted, and once the connection is admitted, for sending the first, second or third type of request to the other device and after sending the request, for configuring the transport layer functions necessary for the connection (910).

7. Device according to any of the preceding claims, **characterized in that** it comprises a first underlying network technology-independent sub-module (1220,1230) responsible for providing the common interface to the service plane and another common interface to the application plane and a second underlying network technology-dependent sub-module (1240,1250) responsible for configuring the specific functions in the transport plane.

8. Device according to any of the preceding claims, **characterized in that** the telecommunication network is a Next Generation Network and the connection is an IP connection.

9. Device (220) in the control plane of a telecommunication network with an architecture comprising service plane (210), control plane and transport plane (230) functions, wherein the device is configured for admission control and resource reservation for telecommunication networks in multi-domain environments, i.e., in environments with multi-domain and/or multi-operator telecommunication networks or in environments with at least one telecommunication network of an operator and a home network of an end user, wherein the device comprises an interface (500,600) for communicating with another device (120) for admission control and resource reservation, which is located in another domain (100), i.e., in a telecommunication network of another operator or in the home network, **characterized in that** the device is configured, in the event of receiving a request from the other device through the interface, for triggering one of the following actions and thus providing guaranteed quality of service in multi-domain environments:
- in the event of receiving a first type of request (720), reserving and configuring the necessary resources;
- in the event of receiving a second type of request (800), releasing pre-assigned resources; and
- in the event of receiving a third type of request (760), modifying the pre-assigned resources.

10. Device according to claim 9, **characterized in that** the device (220) is configured for sending the following responses to the other device (120) through the interface:
- a first type of response (730) for informing the other device about the result of resource reservation and configuration operation, started up after receiving the first type of request (720) from the other device;
- a second type of response (810) for informing the other device about the result of the pre-assigned resource release operation, started up after receiving the second type of request (800) from the other device; and
- a third type of response (770) for informing the other device about the result of the pre-assigned resource modification operation, started up after receiving the third type of request (760) from the other device.

11. Method for admission control and resource reservation for telecommunication networks in multi-domain environments, i.e., in environments with multi-domain and/or multi-operator telecommunication networks or in environments with at least one telecommunication network of an operator and a home network of an end user, **characterized by** the following steps:
- receiving through a device (120) in the control plane of a telecommunication network (100) with an architecture comprising service plane (110), control plane and transport plane (130) functions, a request (710) from the service plane for establishing, modifying or releasing a connection the source address of which is controlled by the domain (100) of the device;
- sending to the other device (220,400) for admission control and resource reservation, which is located in another domain (200), i.e., in a telecommunication network of another operator or in the home network through an interface (500,600), one of the following requests for triggering one of the following actions in the other device and thus providing guaranteed quality of service in multi-domain environments:
- a first type of request (720) so that the other device reserves and configures the necessary resources;
- a second type of request (800) so that the other device releases pre-assigned resources; and
- a third type of request (760) so that the other device modifies the pre-assigned resources and
through the other device (220):
- in the event of receiving a first type of request, reserving and configuring the necessary resources;
- in the event of receiving a second type of request, releasing pre-assigned resources; and
- in the event of receiving a third type of request, modifying pre-assigned resources.

12. Method according to claim 11, **characterized in that** the other device (220) sends one of the following responses to the device (120):
- a first type of response (730) for informing the device (120) about the result of a resource reservation and configuration operation, started up after receiving a first type of request (720) from the device;
- a second type of response (810) for informing the device (120) about the result of a pre-assigned resource release operation, started up after receiving a second type of request (800) from the device; and
- a third type of response (770) for informing the device (120) about the result of a pre-assigned resource modification operation, started up after receiving a third type of request (760) from the device.

13. Method according to claim 11 or 12, **characterized by** the following steps:
- receiving through the device (120) a request from the service plane (110) for establishing, modifying or releasing a connection the source address of which is not controlled by the domain (100) of the device;
- sending to the other device (220) one of the following requests:
- a fourth type of request (830) so that the device for admission control and resource reservation, which is located in the end domain, starts resource reservation and configuration, sending a first type of request (720);
- a fifth type of request so that the device for admission control and resource reservation, which is located in the domain controlling the source address of the connection, starts the pre-assigned resource release, sending a second type of request (800); and
- a sixth type of request so that the device for admission control and resource reservation, which is located in the domain controlling the source address of the connection, starts the pre-assigned resource modification, sending a third type of request (760).

14. Method according to claim 13, **characterized by** sending one of the following responses to the device (120):
- the device located in the end domain sending a fourth type of response (840) to the fourth type of request (830);
- the device located in the domain controlling the source address of the connection sending a fifth type of response to the fifth type of request
- the device located in the domain controlling the source address of the connection sending a sixth type of response to a sixth type of request.

15. Method according to any of claims 11-14, **characterized in that** the following information is sent through the interface:
- information about the required service class for each connection;
- information about the connections;
- required bandwidth for each connection; and
- point of entry into the domain.

16. Method according to claim 11, **characterized by** the following steps:
- after the device (120) receives the request (710) from the service plane (110), it verifies that new resources (900) can be admitted,
- once the connection is admitted, sending the first, second or third type of request to the other device (220); and
- after sending the request, configuring the transport layer functions necessary for the connection (910).

17. Computer program comprising code means suitable for performing the steps of any of claims 11-16, when said program is run in a computer.
